Europäisches Patentamt

European Patent Office

Office européen des brevets

(19)

(11) Veröffentlichungsnummer: **0 125 321**
**B1**

(12) **EUROPÄISCHE PATENTSCHRIFT**

(45) Veröffentlichungstag der Patentschrift:
11.10.89

(51) Int. Cl.⁴: $C\ 05\ F\ \ 9/04$

(21) Anmeldenummer: 83104629.7

(22) Anmeldetag: 11.05.83

(54) Verfahren und dazugehörige Einrichtungen zur aeroben Heissverrottung organischer Stoffe.

(73) Patentinhaber: Nockemann, Otto
Homertskamp 10
D-5270 Gummersbach 1 (DE)

(72) Erfinder: Nockemann, Otto
Homertskamp 10
D-5270 Gummersbach 1 (DE)

(43) Veröffentlichungstag der Anmeldung:
21.11.84 Patentblatt 84/47

(45) Bekanntmachung des Hinweises auf die Patenterteilung: 11.10.89 Patentblatt 89/41

(84) Benannte Vertragsstaaten:
AT BE CH FR GB IT LI LU NL SE

(56) Entgegenhaltungen:
EP–A– 0 060 997
DE–A– 2 446 086
DE–A– 2 711 803
DE–A– 2 850 500
DE–A– 3 023 012

EP 0 125 321 B1

Jouve, 18, rue St-Denis, 75001 Paris, France

## Beschreibung

Die Erfindung bezieht sich auf ein Verfahren zur aeroben Heißverrottung organischer Stoffe, wie landwirtschaftliche und Nährmittelabfallprodukte einschließlich Exkrementen, die von Prozeßluft durchströmt werden, unter gleichzeitiger Erzeugung von Heizwärme und von Dünger, wobei die organischen Stoffe von oben Schächten (36) eines geschlossenen Gehäuses (2) oder seitlich einem liegenden, geschlossenen Rohr (42) zugeführt werden und entgegengesetzt austreten.

Die zu behandelnden organischen Stoffe umfassen neben den Abfallprodukten aus der Landwirtschaft und der Nährmittelproduktion auch solche aus der Forstwirtschaft, dem Gemüse- und Gartenbau, der Landschafts- und Parkpflege sowie menschliche Exkremente aus Kläranlagen und dergleichen. Insbesondere bei der Massentierhaltung stellt die Beseitigung und Verwertung der Exkremente zunehmend ein besonderes Problem dar, weil die hohen anfallenden Mengen meist nicht zur Düngung der wirtschaftseigenen Flächen verwendet werden können. Zudem haben verschiedene Rationalisierungsmaßnahmen, wie die Flüssigentmistung zur Folge, daß die landwirtschaftlichen Tierfäkalien in pumpfähiger Form als Gülle anfallen. Bei der Gülledüngung werden aber die in ihr gelöst vorkommenden Inhaltsstoffe leicht auf den Feldern ausgewaschen, gehen somit verloren und führen zur Verunreinigung des Grundwassers. Der starke Geruch, insbesondere von Geflügel- und Schweinegülle, führt in der Nähe von Wohngebieten zu untragbaren und nicht erlaubten Geruchsbelästigungen für die Bewohner. Auch gewinnen bei ständig starker Gülledüngung die Probleme der Hygiene zunehmend Bedeutung, so ist z. B. bekannt, daß Salmonellen in Rindergülle auch nach ganzjähriger Lagerung nicht abgetötet sind.

Es ist ein Verfahren mit den zugehörigen Einrichtungen bekannt (EP-A-006 0997), durch das mit geringem Aufwand für landwirtschaftliche Betriebe eine günstige aerobe Verrottung des anfallenden organischen Rottematerials ermöglicht werden soll, indem dasselbe in zu schließende Behälter eingebracht, durch mechanische Einrichtungen aufgelockert werden kann und dann herausgenommen werden muß. Hierbei ist es aber sehr nachteilig, daß kein kontinuierlich verlaufender automatisierbarer Betriebsablauf vorliegt, daher ein zu großer Arbeitsaufwand erforderlich ist, das Rottegut in einer großen, dasselbe verdichtenden Höhe aufeinanderliegt, was eine gleichmäßige Gasdurchlässigkeit und hiermit Verrottung beeinträchtigt. Außerdem wird die Prozeßluft nur einmal durch das Rottegut geführt, so daß seine Inhaltsstoffe überwiegend ins Freie gelangen und somit verlorengehen. Infolge all dieser Nachteile bieten diese Vorschläge keine wirtschaftliche Verrottung der zu verarbeitenden organischen Massen und sie fanden keinen Eingang in die Praxis.

Gemäß einem weiteren bekannten Vorschlag (DE-OS 3 023 012) soll zur aeroben Verrottung von Stallmist und/oder anderen organischen Substanzen beispielsweise diese in Säcke verpackt und in belüftbare Behälter eingebracht werden, wobei oben in Schalen (6) Erde eingefüllt wird, durch die die heiße Prozeßluft infolge Durchströmens gefiltert wird und anschließend zu Heizzwecken Verwendung findet. Gemäß einem weiteren Ausführungsbeispiel soll die Heizwärme dadurch ohne große Verluste in Leitungen am Bedarfsort zur Verfügung gestellt werden, daß die organischen Verrottungssubstanzen in Container eingegeben werden, die mit Umwälzeinrichtungen ausgerüstet und belüftbar sind. Aber auch Einrichtungen dieser Art sind mit den bei der ersten Entgegenhaltung erwähnten Nachteilen behaftet und durch die hohen Transportkosten derartiger Container ist die Wirtschaftlichkeit noch stärker in Frage gestellt.

Hier will die Erfindung Abhilfe schaffen, indem die Aufgabe, organische Produkte einschließlich der Exkremente sowohl umweltfreundlich zu entsorgen, als auch hierbei Dünger und Heizwärme zu erzeugen, gemäß den in den Ansprüchen aufgezeigten Wegen zu lösen ist.

Die durch die Erfindung erreichten Vorteile sind im wesentlichen darin zu sehen, daß aus organischen Produkten, ob aus Abfällen stammend oder solchen, die zur Düngerherstellung erzeugt werden, unter wirtschaftlich günstigen Bedingungen in kurzer Zeit hochwertiger Dung, dessen Bestandteile gebunden sind, hergestellt wird, wobei überschüssige Wärmemengen für Heiz- und Trocknungszwecke abgezweigt werden, hierdurch werden Nährstoffverluste vermieden, die landwirtschaftlichen und verwandten Betriebe können sich mit Dünger selbst versorgen bzw., bei Überschuß an solchem, verkaufsfähigen Dünger erzeugen, und die organischen Abfallprodukte belasten nicht die Umwelt, wie Grundwasserverseuchung, Geruchsbelästigung sowie Schädlingsbefall, wie er auftritt, wenn die Keime in den Exkrementen nicht abgetötet werden. Zudem wird durch die Heißverrottung zwischen etwa 60 und 70 °C der Samen in den organischen Abfallprodukten abgetötet, so daß der Dünger keinen Unkrautbewuchs hervorruft. Außerdem werden sonstige Energiequellen insbesondere aus fossilen Vorkommen geschont, und es fallen die Belastungen, die die organischen Abfälle, wenn sie auf Müllkippen bzw. auf Deponien gebracht werden, weg. Auch benötigen landwirtschaftliche und verwandte Betriebe bei Anwendung des erfinderischen Verfahrens nicht mehr, wie bisher, großvolumige Lagerräume für das Sammeln der organischen Abfälle und anfallenden Exkremente.

Im folgenden wird die Erfindung anhand von Ausführungswegen darstellenden Zeichnungen näher erläutert. Es zeigt

Figur 1 einen Querschnitt durch einen Verrotter mit schrägliegenden Schächten,

Figur 2 einen Querschnitt gemäß der Schnittlinie A-B in Figur 1,

Figur 3 eine Einzeleinheit Z nach Figur 1,

Figur 4 einen Querschnitt gemäß der Schnittlinie C-D in Figur 3,

Figur 5 einen Querschnitt durch einen Verrotter, der im wesentlichen aus einem waagerecht liegenden Hohlkörper besteht, in dem ein Transportmittel angeordnet ist und der von einem Wärmeträger, z. B. Wasser oder Gülle, umspült ist,

Figur 6 eine Seitenansicht gemäß Figur 5, teils aufgeschnitten dargestellt,

Figur 7 einen Querschnitt gemäß der Schnittlinie E-F nach Figur 5.

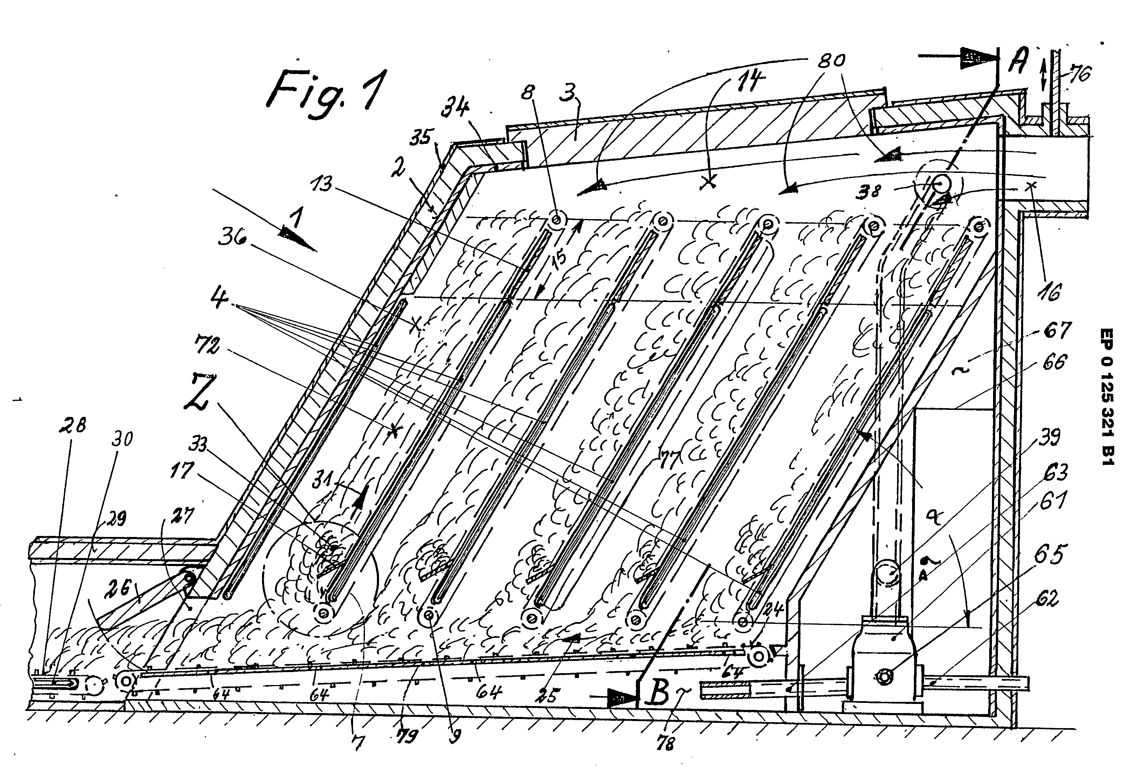

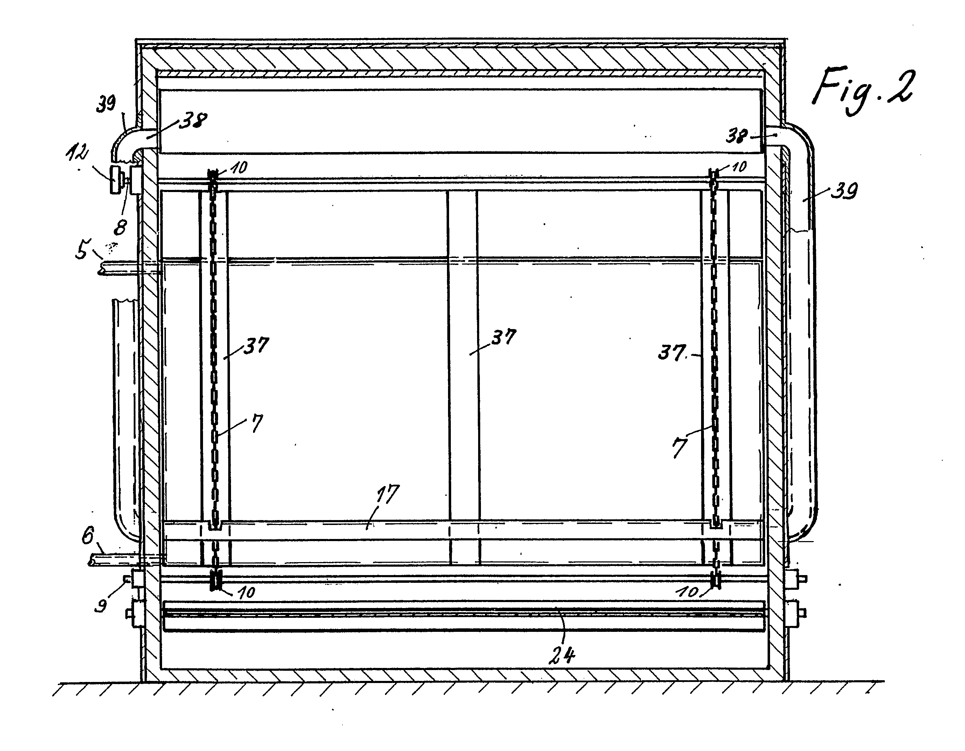

Ein Verrotter mit Schächten 1 nach den Fig. 1 und 2 besteht im wesentlichen aus einem Gehäuse 2, das aus Beton bzw. Gasbeton oder auch einer Holzkonstruktion bzw. aus Kunststoffmaterial hergestellt sein kann, wobei ein Deckel 3 auf der ganzen Breite vorgesehen ist, damit durch Wärmetauscherplatten 4 und Abteilwände 13 gebildete Böden 77 mit den anderen im Inneren untergebrachten Teilen montiert werden können, wobei die Böden 77 an den Seitenwänden befestigt werden und auch hier Zu- und Abflußrohre 5 und 6 für das Wasser, das die Wärmetauscherplatten 4 durchfließt, aus dem Gehäuse 2 heraustreten. Um die Böden 77 sind zwei Kettentriebe 7 angeordnet, deren gemeinsame obere und untere Wellen 8 bzw. 9 ebenfalls im Gehäuse 2 gelagert sind. Auf den Wellen 8 und 9 sitzen jeweils Kettenräder 10, über die Gliederketten 11 angetrieben werden, wobei der Antrieb der Welle 8 über eine Kupplung 12 von einem nicht dargestellten Antriebsaggregat erfolgt. Durch diese Ausbildung liegen für die Wellen 8 und 9 der Kettenräder 10 keine Lager innerhalb des Gehäuses des Verrotters mit Schächten 1 und sind somit keinen Korrosionseinflüssen und dergleichen ausgesetzt.

Unterhalb eines oberen Zubringbereichs 14 des Gehäuses 2 sind in Verlängerung zu den Wärmetauscherplatten 4 Abteilwände 13 in einem Bereich 15 angeordnet, durch die einzelne Schächte 36 für die organischen Stoffe (72) verlängert sind. In diesem Bereich 15 werden die eingebrachten organischen Stoffe (72 binnen einiger Stunden angewärmt, damit diese von außen eingebrachten kalten organischen Stoffe 72 nicht bereits auf den Wärmetauscherplatten 4 aufliegen, wodurch die in diesen befindliche Flüssigkeit abgekühlt würde.

Bei dem Befüllen, beispielsweise über einen Einfüllschacht 16 mittels eines nicht dargestellten Gebläses gemäß Pfeilen 80, können die Schächte 36 im oberen Bereich 15 fast ganz mit den zunächst lockeren organischen Stoffen 72 gefüllt werden. Durch das Absetzen der organischen Stoffe 72 ist dann im weiteren Verlauf der Schächte 36 erreicht, daß hier die Füllung derselben nicht mehr als etwa 90 % beträgt.

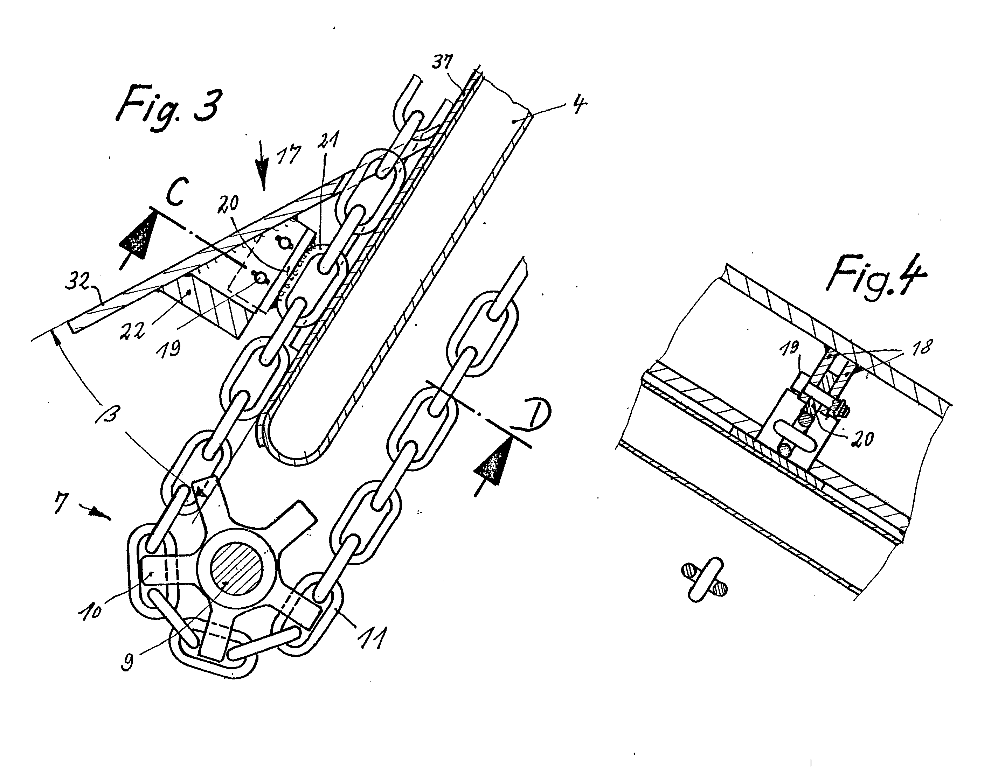

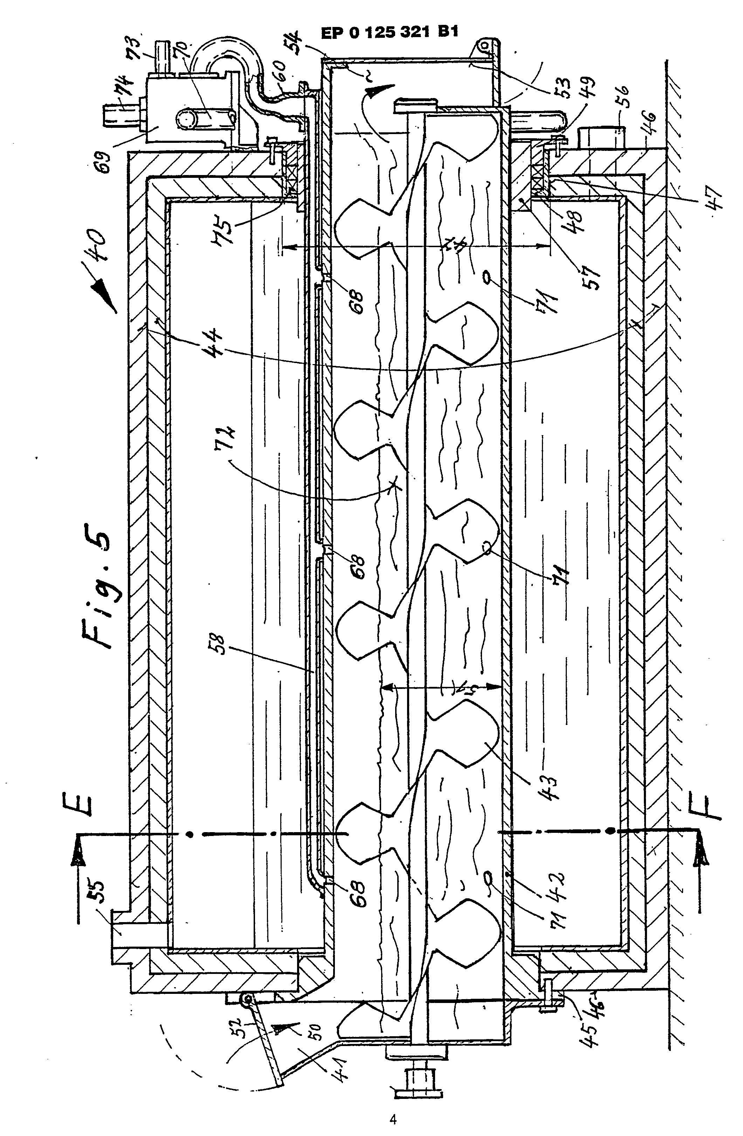

Mit den Kettentrieben 7 ist ein Einmischwinkel 17 angeschlossen, wie es auch in den Figuren 3 und 4 im einzelnen dargestellt ist. Der Einmischwinkel 17 ist an den Anschlußstellen von Gliederketten 11 der Kettentriebe 7 im unteren Bereich unterbrochen und weist zwei Stegplatten 18 auf, die in zwei Löcher eingearbeitet sind und in die Bolzen 19 eingeführt werden, die ebenfalls in die entsprechenden Löcher einer Lasche 20, die sich fast an einem senkrecht stehenden Kettenglied 21 befindet, eingesteckt werden. Hierdurch ist eine sichere Befestigung des Einmischwinkels 17 an den Kettentrieben 7 gewährleistet. Die Schwächung des Einmischwinkels 17 durch den Durchbruch für die Kette kann beispielsweise durch eine hintere Brücke 22 ausgeglichen werden. Durch diese Art der Anordnung können die Kettenräder 10 handelsübliche sein. Die Einmischwinkel 17 bestreichen nach Einschalten des Antriebes der Kettentriebe 7 die Böden 77 insgesamt von unten nach oben und gelangen dann auf der Rückseite derselben im von den organischen Stoffen freien Raum wieder in ihre untere Ausgangsposition.

Die Böden 77 sind unter einem Winkel α von der Waagerechten schrägliegend angeordnet. Hierdurch liegen die organischen Stoffe 72 noch gut auf den Böden 77 auf und rutschen noch selbständig dann nach unten, wenn die unten befindlichen, fertig verrotteten organischen Stoffe 72 aus dem Verrotter mit Schächten 1 entnommen werden.

Hierzu wird ein Kratzboden 24 in Pfeilrichtung 25 bewegt, und die von den Schächten kommenden, auf ihm liegenden organischen Stoffe 72 drücken gegen eine schwenkbar angeordnete, schrägliegende Verschlußkappe 26, öffnen diese — wie es in der dargestellten Position gezeigt ist — so, daß die organischen Stoffe ausgetragen werden.

Der Kratzboden 24 ist zu der Ausbringöffnung 27 und den unteren Enden der Böden 77 nach außen hin vertieft liegend vorgesehen, damit den aus den einzelnen Schächten 36 jeweils, zufließenden organischen Stoffen 72 der erforderliche Freiraum zur Verfügung steht.

Im Anschluß an die Ausbringöffnung 27 können weitere Einrichtungen vorgesehen sein ; angedeutet ist hier wiederum ein Kratzboden 28, der in einem angeschlossenen Gehäuse 29 liegt, in dem beispielsweise Wärmetauscher 30, die durch das die Wärmetauscherplatten 4 durchströmende Wasser erhitzt werden. Da diese Wärmetauscher 30 im Bereich des Kratzbodens 28 die Auflage für die organischen Stoffe bilden, wird hierdurch das Trocknen derselben bewirkt.

Es kann auch so vorgegangen werden, daß sich der Kratzboden 24 insgesamt im Gehäuse 2 des Verrotters mit Schächten 1 befindet und daß die Verschlußkappe 26 dann, wenn kein Material aus der Ausbringöffnung 27 austritt, das Gehäuse völlig abschließt.

Die Winkelplatte 32 des Einmischwinkels 17 ist gemäß Fig. 3 etwa unter einem Winkel β von 30° zur Oberfläche des Bodens 77 angestellt, wodurch sich beim Bewegen des Einmischwinkels 17 in Pfeilrichtung 31 über der Winkelplatte 32 ein Stau 33 in der aufliegenden Sicht der organischen Stoffe 72 bildet. Die erste auf den Wärmetauscherplatten 4 aufliegende Schicht der organischen Stoffe 72 ist durch den Wärmetausch abgekühlt, wodurch in ihr der Verrottungsprozeß verlangsamt bzw. unterbrochen wird, zudem stellt sich eine Wärmeisolation zwischen Wärmetauscherplatten 4 und den heißen organischen Stoffen 72 dar. Durch den Stau 33 drücken sich die organischen Stoffe in diesem Bereich tief in die übrigen heißen Stoffe 72 ein, wobei der hier entstehende Stau 33 bei Erreichen einer entsprechenden Höhe durch das weitere Bewegen des Einmischwinkels 17 von Zeit zu Zeit abbricht, und hinter ihm rieseln hierbei heiße organische Stoffe 72 auf die Wärmetauscherplatten 4, so daß bei jedem Durchlauf des Mischwinkels 17 die abgekühlten organischen Stoffe intensiv in die heißen eingemischt werden.

Zweckmäßigerweise werden auf den Böden 77 Gleitschienen 37 angeordnet, auf denen die Ketten und Einmischwinkel 17 aufliegen. Je nach dem Verlauf des Verrottungsprozesses werden die Einmischwinkel 17 in kürzeren oder längeren Zeitabständen, beispielsweise stündlich oder zweistündlich, auf der gesamten Länge der Böden 77 von unten nach oben bewegt, so daß in regelmäßigen. Abständen eine Auswechslung oder Vermischung der organischen Stoffe 72 stattfindet. Der Einmischwinkel 17 kann auch mit entsprechend geringerer Geschwindigkeit kontinuierlich angetrieben werden. Die Größe des Anstellwinkels β der Einmischwinkel 17 kann auch der Rieselfähigkeit der jeweils zu verarbeitenden organischen Stoffe 72 und den entsprechenden Betriebsverhältnissen — beispielsweise zwischen 25 und 45 °C — angepaßt sein.

Die organischen Stoffe 72 können oben durch ein nicht dargestelltes Gebläse über einen Einfüllschacht 16 eingegeben werden, oder es wird so vorgegangen, daß die organischen Stoffe 72 über einen Kratzboden in die Schächte eingebracht werden, der bedarfsweise über den Schachtöffnungen waagerecht so hin- und herbewegt wird, daß die Schächte 36 gleichmäßig bis zu 80-90 % gefüllt werden, nachdem sich die organischen Stoffe entsprechend abgesetzt haben.

Die Gehäusewände können von innen und außen durch Isolationsschichten 34 und 35 geschützt sein, so daß nur in begrenztem Umfang Wärmeverluste durch Abstrahlung entstehen.

Von einem Turboverdichter und Mischer 61 wird über Löcher 38 sowie Rohrleitungen 39 die heiße Prozeßluft aus dem oberen Zubringbereich 14 entnommen und mit Frischluft versetzt, die über ein Rohr 62 angesaugt wird. Über ein Rohr 63 wird das Luftgemisch in einen Raum 78 unterhalb des Kratzbodens 24 eingeblasen, von wo aus es durch Löcher 64 eines Bodens 79 in das organische Material 72 eingedrückt wird. Über ein Rohr 65 kann im Bedarfsfall die überschüssige Abluft ins Freie gelangen. Eine Tür 66 ermöglicht ein Betreten des Raumes 67.

Durch das Auf- und Abbewegen eines Schiebers 76 ist der Einfüllschacht 16 zu öffnen bzw. zu verschließen.

Alle Schaltungen und Steuerungen, wie das Einfüllen und Ausscheiden der organischen Stoffe 72, Bewegen der Einmischwinkel, das Entnehmen des Heizwassers, das Trocknen der ausgeschiedenen organischen Stoffe 72 und dergleichen, können manuell oder über automatische Programmsteuerungen erfolgen.

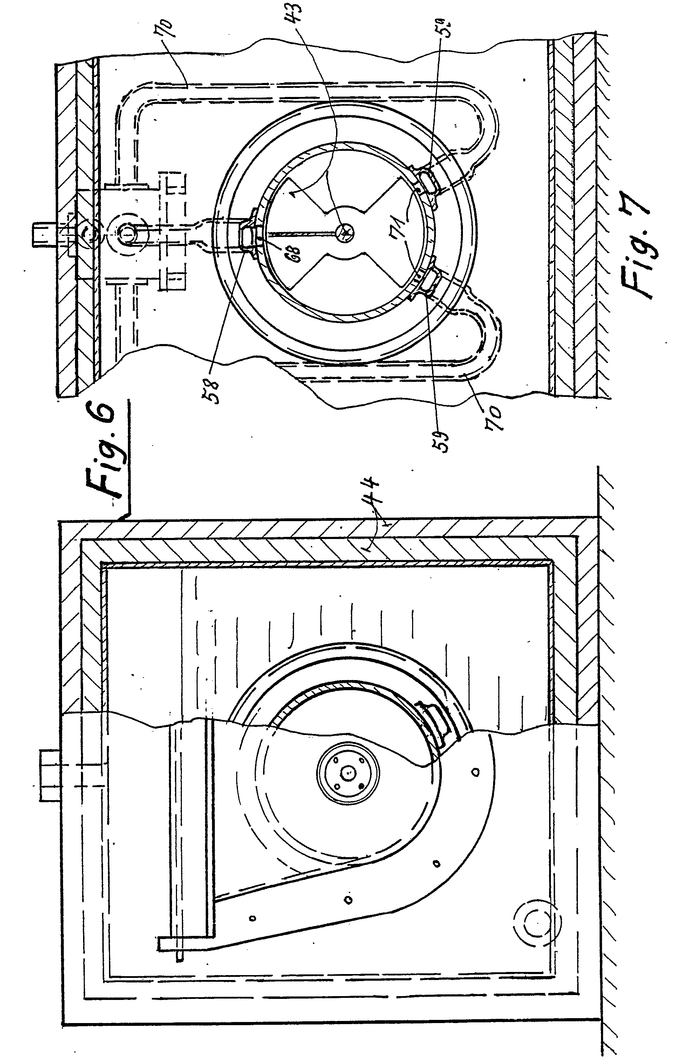

Das erfinderische Verfahren kann gemäß den Figuren 5 bis 7 beispielsweise einrichtungsgemäß auch durch einen Verrotter 40 zweckmäßig verwirklicht werden, wobei die organischen Stoffe 72 über einen Einfüllstutzen 41 einen waagerecht oder etwas schräg angeordneten Rohr 42 zugeführt weren, in dem eine sogenannte Paddelschnecke 43 rotierend angeordnet ist. Das Rohr kann auch als Hohlkörper ausgebildet sein, das nur in der unteren Hälfte der Paddelschnecke 43 in runder Form angepaßt ist. Bei der Paddelschnecke 43 ist, wie es auch durch die Figur 7 zu erkennen ist, der Schneckengang häufig unterbrochen, wodurch sowohl eine Durchmischung der organischen Stoffe 72 als auch ein Transport derselben, letzterer mit entsprechend geringerer Geschwindigkeit, erfolgt.

Das Rohr 42 ist in einem Gehäuse 44 angeordnet, indem es beispielsweise mit einem Flansch 45 mit einer Außenstirnwand 46 über Verschraubungen angeschlossen wird, und zwar in bekannter Weise so, daß eine Abdichtung für die im Gehäuse 44 befindliche Flüssigkeit dadurch erreicht ist, daß zwischen dem Flansch 45 und der Außenstirnwand 46 eine Dichtung gelegt ist. An der anderen Seite des Gehäuses 44 weist dasselbe für den Durchgang des Rohres 42 ein vergrößertes Loch 47 auf, in das ein Dichtungsstück 48 eingesetzt und in dieses eine Dichtungspackung 75 eingebracht wird, wobei letztere über einen einzudrückenden Dichtungsringflansch 49 unter Spannung gesetzt wird, so daß eine wirksame Abdichtung vorliegt. Hierdurch kann das Rohr 42 ohne großen Aufwand zu Reinigungs- oder Reparaturarbeiten aus dem Gehäuse bequem herausgenommen und wieder eingesetzt werden.

Über den Einfüllstutzen 41 werden manuell oder über mechanische Zuführungseinrichtungen bekannter Art die organischen Stoffe 72 entsprechend dem Pfeil 50 eingebracht, wo sie von der Paddelschnecke 43 bei deren Drehung erfaßt werden, so daß das Rohr 42 entsprechend gefüllt wird.

Beim Einfüllen werden im Verhältnis zur Rotation der Paddelschnecke 43 so viel organische Stoffe 72 zugeführt, daß das Rohr nur bis etwa zu einer Füllhöhe 51 gefüllt wird, was annähernd einem Füllungsgrad von 70 % entspricht. Hiernach werden bei weiterer Drehung der Paddelschnecke 43, entweder in bestimmten Abständen oder langsam kontinuierlich, die organischen Stoffe 72 einseitig stetig angehoben, bis es dann von der sich hierbei bildenden oberen Materialanhäufung nach Überschreiten des Böschungswinkels portionsweise auf die organischen Stoffe 72 verteilt herabfällt. Somit werden die organischen Stoffe 72 der äußeren abgekühlten Schicht ständig mit dem inneren heißen Inhalt vermischt.

Durch einen Verschlußdeckel 52 am Einfüllstutzen 41 und einen Verschlußdeckel 53 am Auslaufstutzen 54 wird für die Zeiten, in denen die organischen Stoffe 72 weder eingefüllt noch herausgenommen werden, der Innenraum des Rohres 42 nach außen verschlossen, so daß dann die heiße Prozeßluft im Rohr 42 sich nicht gegen kühlere von außen austauscht.

Das Rohr 42 ist, falls dieser Verrotter 40 zur Erzeugung von Heizwasser benutzt wird, vom Wasser im Gehäuse 44 umspült, das über einen Zuleitungsstutzen 55 nach Bedarf zuläuft und über einen Entleerungsstutzen 56 entnommen wird. Bei diesem Ausführungsbeispiel kann ein einziges Rohr 42 in einem Gehäuse 44 vorgesehen sein, für größere Anlagen kann eine entsprechende Vielzahl solcher Rohre 42, neben- oder übereinander liegend, vorgesehen werden.

Anstelle von Heizwasser kann in das Gehäuse 44 zum Umspülen des Rohres 42 beispielsweise Gülle, vermischt mit gemahlenem Stroh oder dergleichen, eingefüllt werden, die durch die Erhitzung eine Biogasverrottung erfährt.

Auf dem Rohr 42 ist ein Ring 57 fest aufgesetzt; durch ihn sind Rohrleitungen 58 und 59 durchgeführt. An der Rohrleitung 58 schließt der Stutzen 60 an. Ebenfalls sind Löcher 68 im oberen Bereich des Rohres 42 an diese Rohrleitung 58 angeschlossen. Über die Löcher 68 entweicht heiße Luft aus dem Rohr 42, die sich oberhalb des Materials 72 ansammelt, oder sie wird vom Turboverdichter und Mischer 69 über den Stutzen 60 abgesaugt und von ihm über die Rohre 70 in die beiden Rohrleitungen 59 gedrückt, von denen sie über Löcher 71 wieder in die organischen Stoffe 72 von unten eindringt. Über ein Rohr 73 gelangt der für den Verrottungsprozeß erforderliche Frischluftanteil in den Turboverdichter und Mischer 69, wobei über den Rohrstutzen 74 der Altluftanteil ausgeschieden wird.

## Patentansprüche

1. Verfahren zur aeroben Heißverrottung organischer Stoffe, wie landwirtschaftliche und Nährmittelabfallprodukte einschließlich Exkrementen, die von Prozeßluft durchströmt werden, unter gleichzeitiger Erzeugung von Heizwärme und von Dünger, wobei die organischen Stoffe von oben Schächten (36) eines geschlossenen Gehäuses (2) oder seitlich einem liegenden, geschlossenen Rohr (42) zugeführt werden und entgegengesetzt austreten, dadurch gekennzeichnet, daß die organischen Stoffe (72) geschlossene Räume, wie Schächte (36) durch ihre Schwerkraft oder Rohre (42) durch mechanische Fördereinrichtungen (43) durchlaufen, von den Wärmeübergabeflächen, wie Böden (77) oder Wände der Rohre (42), auf denen sie aufliegen, durch mechanisch bewegte Mittel (17, 43) in Abständen oder mit geringer Geschwindigkeit kontinuierlich abgehoben und in die Gesamtschicht der organischen Stoffe (72) eingemischt werden, daß die die organischen Stoffe (72) durchdringende Prozeßluft oben abgesaugt und von unten den organischen Stoffen (72) wieder zugeführt wird, wobei die Prozeßluft durch Austausch mit einem dem Sauerstoffgehalt im erforderlichen Maße ergänzenden Frischluftanteil versetzt wird.

2. Verfahren nach Anspruch 1, dadurch gekennzeichnet, daß die Heizwärme aus der Prozeßluft durch Leitung derselben über Wärmetauscher abgeführt wird.

3. Verfahren nach Anspruch 1, dadurch gekennzeichnet, daß die freien Wärmeenergiemengen von im Verrotter (1, 40) befindlichen organischen Stoffen (72) zur Trocknung der ausgeschiedenen organischen Stoffe (72) benutzt werden, wobei die Abgabe der Wärmeenergiemengen zur Trocknung mittels manuell bedienter oder automatisch gesteuerter Schaltanlagen geregelt wird.

4. Vorrichtung zur Ausführung des Verfahrens nach Anspruch 1, bei der in einem zu verschließenden und wärmeisolierten Gehäuse (2) ein oder mehrere Schächte (36) vorgesehen sind und die Füllung von oben erfolgt, dadurch gekennzeichnet, daß der oben offene Schacht (36) bzw. die offenen Schächte (36) schrägliegend angeordnet ist bzw. sind, der Boden (77) bzw. die Böden (77) des Schachtes (36) bzw. der Schächte (36) aus Wärmetauscherplatten (4) bestehen und um diese antreibbare Kettentriebe (7) gelegt sind, an denen auf der gesamten Schachtbreite Einmischwinkel (17) angeordnet sind, wobei unterhalb der Unterseite der offenen Schächte (36) Entleerungsorgane, vorzugsweise ein Kratzboden (24), vorgesehen sind.

5. Vorrichtung nach Anspruch 4, dadurch gekennzeichnet, daß der nach rückwärts gerichtete Anstellwinkel β des Einmischwinkels (17) 25-40° und seine Höhe, von den Wärmetauscherplatten (4) aus gemessen, etwa 20 % der lichten Weite des Schachtes (36), jedoch mindestens 40 mm beträgt.

6. Vorrichtung nach Anspruch 5, dadurch gekennzeichnet, daß die organischen Stoffe (72) über einen Einfüllschacht (16) durch ein Gebläse den Schächten (36) zugeführt werden oder daß die organischen Stoffe (72) durch ein Förderband, z. B. durch einen Kratzboden (24), in die Schächte (36) eingegeben werden, indem das mit den organischen Stoffen (72) belegte und angetriebene Förderband über den Schächten (36) in etwa waagerechter Bewegung so entsprechend hin und her versetzt wird, daß die vorzugsweise 90 %-ige Füllung der Schächte gleichmäßig erreicht wird.

7. Vorrichtung zur Ausführung des Verfahrens nach Anspruch 1, dadurch gekennzeichnet, daß der Verrotter (40) im wesentlichen aus einem waagerecht oder etwas schräg angeordneten Rohr (42) oder einem nur in der unteren Hälfte runden Hohlkörper besteht, in dem ein rotierendes Förderelement, zweckmäßigerweise eine unterbrochene sogenannte Paddelschnecke (43), angeordnet ist und wobei an einer Außenstirnwand (46) des Verrotters (40) ein Einfüllstutzen (41) und an der anderen Stirnwand ein Auflaufstutzen (54) für die organischen Stoffe (72) vorgesehen ist, wobei der Verrotter (40) von einem Wärmeträger, beispielsweise Heizwasser, umspült ist, das bedarfsweise entnommen und zugeführt wird und wobei die gesamte Anlage von außen vollwärmeisoliert ist.

8. Vorrichtung nach den Ansprüchen 4 und 7, dadurch gekennzeichnet, daß der Einfüllschacht (16) mit einem Schieber (76) oder dergleichen und der Ausbringschacht (27) mit einer Verschlußkappe (26) sowie der Einfüllstutzen (41) mit einem Verschlußdeckel (52) und der Auslaufstutzen (54) mittels eines Verschlußdeckels (53) in den Betriebszeiten außerhalb der Befüllungen und Entleerungen verschlossen werden kann.

9. Verfahren nach Anspruch 1, dadurch gekennzeichnet, daß der Schacht (36) bzw. die Schächte (36) nur bis etwa 90 % ihrer lichten Weite und das Rohr (42) bis zur Füllhöhe (51) mit organischen Stoffen (72) gefüllt werden.

10. Vorrichtung nach Anspruch 7, dadurch gekennzeichnet, daß als Wärmeträger Gülle bzw. ausgegaste Gülle, vermischt mit gemahlenem Stroh, verwendet wird.

11. Vorrichtung nach Ansprüchen 4 und 7, dadurch gekennzeichnet, daß zur Absaugung der heißen Prozeßluft aus dem Zubringbereich (14) bzw. oberhalb der organischen Stoffe (72), welche sich im Rohr (42) befinden, über Rohrleitungen (39) bzw. solche (58) Turboverdichter und Mischer (61, 69) verwendet werden, die den erforderlichen Frischluftanteil in die Prozeßluft einmischen und gegebenenfalls den entsprechenden Altluftanteil ausscheiden.

## Claims

1. Process for aerobic hot decomposition rotting of organic matter such as agricultural wastes and wastes from the production of processed foodstuffs, including excrements, through which process air is passed, at the same time generating thermal heat and producing fertilizers, whereby the organic matter is fed from above into chutes (36) of a fully enclosed housing (2) or from the side into a horizontal, fully enclosed pipe (42) and is discharged at the opposite end, characterized in that the organic matter (72) passes through fully enclosed housings such as chutes (36) under its own weight or is transported through pipes (42) by mechanical conveying facilities (43), is lifted off the heat transfer surfaces such as floors (77) or the walls of the pipe (42) on which it lies by mechanically driven means (17, 43) either at given intervals or continuously at low speed and is mixed into the general layer of the organic matter (72), that the process air passing through the organic matter (72) is drawn off above the matter, circulated and passed through the organic matter (72) again from below, whereby the process air is mixed with the necessary amount of fresh air to maintain the required oxygen content in the process air.

2. Process in accordance with Claim 1, characterized in that the thermal heat from the process air is removed by passing the air through heat exchangers.

3. Process in accordance with Claim 1, characterized in that the free thermal energy of the organic matter (72) in the rotter (1, 40) is utilized to dry the discharged organic matter (72), whereby the transfer of the thermal energy for drying is regulated by manually operated or automatically controlled switchgears.

4. Installation for performance of the process in accordance with Claim 1, in which one or more chutes (36) are installed in a fully enclosed and thermally insulated housing (2) and which are charged from above, characterized in that the chute(s) (36) which is/are open at the top is/are inclined, that the floor(s) (77) of the chute(s) (36) consist of heat exchanger panels (4) which are surrounded by powered chain drives (7) on which blending arms (17) are mounted across the full width of the chute(s), and that discharge organs, preferably a scraper floor (24), are located below the underside of the open chute(s) (36).

5. Installation in accordance with Claim 4, characterized in that the rearward angle of inclination β of the blending arm (17) is 25-40° and its height, measured from the heat exchanger panels (4), is approx. 20 % of the clearance width of the chute(s) (36), but not less than 40 mm.

6. Installation in accordance with Claim 4, characterized in that the organic matter (72) is loaded into the chutes (36) by a fan via a charging chute (16) or that the organic matter (72) is charged into the chutes (36) by a belt conveyor, e. g. a scraper floor (24), in that the driven belt conveyor with the organic matter (72) is moved horizontally backwards and forwards above the chutes (36) in such a way that the preferred 90 % filling of the chutes is uniformly achieved.

7. Installation for performance of the process in accordance with Claim 1, characterized in that the rotter (40) consists primarily of a horizontal or slightly inclined pipe (42) or of a hollow body which is rounded only in its lower half, in which a rotating conveying element, expediently an interrupted « paddle screw » (43), is located, that a charge pipe (41) is provided in one outer end wall (46) and a discharge pipe (54) in the other end wall of the rotter (40) for the organic matter (72), that the rotter (40) is surrounded by a heat transfer medium, for example water, which can be pumped in or out as required, and that the whole installation is completely thermally insulated to the outside.

8. Installation in accordance with Claims 4 and 7, characterized in that the charging chute (16) is fitted with a shutter valve (76) or similar device, that discharge chute (27) can be sealed with a cap (26), charge pipe (41) with a cap (52) and discharge pipe (54) with a cap (53) during the operating periods when the chutes are not being charged or discharged.

9. Process in accordance with Claim 1, characterized in that the chute(s) (36) is/are filled only to approx. 90 % of the clearance width and pipe (42) only to the filling level (51) with organic matter (72).

10. Installation in accordance with Claim 7, characterized in that liquid manure or degassed liquid manure mixed with ground straw is used as the heat transfer medium.

11. Installation in accordance with Claims 4 and 7, characterized in that the hot process air is extracted from the feeder zone (14) and/or from above the organic matter (72) in pipe (42) through a pipe system (39) by such (58) turbo-compressors and mixers (61, 89) which blends the required amount of fresh air into the process air and, if necessary, exhausts the corresponding quantity of old air.

## Revendications

1. Processus de décomposition aérobie à chaud de substances organiques telles que des déchets alimentaires et agricoles, y compris des excréments qui sont traversés par un courant d'air de processus en produisant simultanément de la chaleur pour chauffage et de l'engrais, les substances organiques étant amenées par le haut dans des dispositifs (36) d'un carter fermé (2) ou latéralement dans un tube fermé (42) et qui ressortent à l'opposé, caractérisé par le fait que les substances organiques (72) parcourent des espaces fermés comme les dispositifs (36) grâce à leur force de gravité ou comme les tubes (42) grâce à des dispositifs mécaniques de transport (43), qu'elles sont soulevées, à intervalles réguliers ou continuellement à faible vitesse, des surfaces d'apport de chaleur telles que les planchers (77) ou les parois des tubes (42) sur lesquelles elles reposent, grâce à des moyens (17, 43) mis en mouvement mécaniquement, qu'elles sont mélangées à toute la couche des substances organiques (72) de telle sorte que l'air de processus les pénétrant est aspiré par en haut et reconduit aux substances organiques (72) par en bas, celui-ci étant déplacé par l'échange avec une part d'air frais complétant la teneur en oxygène en quantité requise.

2. Processus selon la revendication 1, caractérisé par le fait que la chaleur de chauffage provenant de l'air de processus est évacuée par la même conduite par l'intermédiaire d'échangeur thermique.

3. Processus selon la revendication 1, caractérisé par le fait que les quantités libres d'énergie calorifique des substances organiques (72) se trouvant dans l'appareil de décomposition (1,40) servent à la dessiccation des substances organiques (72) séparées, le dégagement des quantités d'énergie calorifique pour la dessiccation étant réglé par des installations de mise en circuit commandées à la main ou automatiquement.

4. Installation pour la réalisation du processus selon la revendication 1 dans laquelle un ou plusieurs dispositifs (36) sont prévus dans un carter (2) pouvant se fermer et être calorifugé, le remplissage ayant lieu par le haut, caractérisé par le fait que le dispositif (36) en haut, ouvert, à savoir les dispositifs ouverts (36) sont disposés inclinés, que le plancher (77), à savoir les planchers (77) du dispositif (36), à savoir des dispositifs (36) sont constitués par les plaques d'échangeur thermique (4), par le fait qu'autour de celles-ci il y a des commandes par chaîne (7) entraînables, auxquelles des angles d'ingérence (17) sont disposés sur toute la largeur des dispositifs, en ayant prévu des organes de vidange à la partie inférieure des dispositifs ouverts (36), de préférence un plancher-racloir (24).

5. Installation selon la revendication 4, caractérisée par le fait que l'angle d'inclinaison β de l'angle d'ingérence (17) orienté vers l'arrière soit de 25 à 40° et que sa hauteur, mesurée à partir des plaques d'échangeur thermique (4) soit d'environ 20 % de la largeur intérieure du dispositif (36), mais qu'elle soit au moins de 40 mm.

6. Installation selon la revendication 4, caractérisée par le fait que les substances organiques (72) sont amenées aux dispositifs (36) par un entonnoir de remplissage (16) par une buse ou bien que les substances organiques (72) soient apportées aux dispositifs (36) par une bande transporteuse, par ex. par un plancher-racloir (24), de telle sorte que la bande transporteuse entraînée et chargée des substances organiques (72) se déplace de façon correspondante au-dessus des dispositifs (36) dans un mouvement à peu près horizontal de façon à obtenir de préférence un remplissage des dispositifs uniforme à 90 %.

7. Installation pour la réalisation du processus selon la revendication 1, caractérisée par le fait que l'appareil de décomposition (40) est constitué principalement par un tube (42) disposé horizontalement ou légèrement incliné ou par un corps creux rond seulement dans sa partie inférieure dans lequel on a installé un élément rotatif de transport, le mieux serait une vis sans fin dite à ailettes (43) ininterrompue en prévoyant une tubulure de remplissage (41) sur une cloison frontale extérieure (46) de l'appareil de décomposition (40) et sur l'autre face une tubulure d'arrêt (54) pour les substances organiques, l'appareil de décomposition (40) étant baigné par agent caloporteur, par exemple de l'eau très chaude qui en cas de besoin peut être extraite et amenée, l'ensemble de l'installation étant entièrement calorifugé.

8. Installation selon les revendications 4 et 7, caractérisée par le fait que l'entonnoir de remplissage (16) peut être fermé par un verrou (76) ou quelque chose d'équivalent et que le dispositif de sortie (27) peut l'être par un couvercle (26), la tubulure de remplissage (41) par un couvercle (52) et la tubulure de sortie (54) par un couvercle (53) pendant les périodes de service en dehors du remplissage et des vidanges.

9. Processus selon la revendication 1, caractérisé par le fait que le dispositif (36), à savoir les dispositifs (36) ne doivent être remplis que jusqu'à environ 90 % de leur largeur intérieure et que le tube (42) ne doit être rempli de substances organiques (72) que jusqu'à la hauteur de remplissage (51).

10. Installation selon la revendication 7 caractérisée par le fait que comme agent caloporteur on utilise du lisier, à savoir du lisier sans gaz mélangé à de la paille broyée.

11. Installation selon les revendications 4 et 7 caractérisée par le fait que pour l'aspiration de l'air chaud du processus en provenance de la zone d'amenée (14), à savoir au-dessus des substances organiques (72) qui se trouvent dans le tube (42) au-dessus des conduites (39) ou (58) on utilise un turbocompresseur et un mélangeur (61, 69) qui mélangent la partie nécessaire d'air frais à l'air du processus et qui le cas échéant évacuent la partie correspondante d'air usé.

Fig. 1

Fig. 2

EP 0 125 321 B1

Fig. 3

Fig. 4

EP 0 125 321 B1

Fig.5

*Fig.6*

*Fig. 7*

EP 0 125 321 B1